Europäisches Patentamt

European Patent Office

Office européen des brevets

(11) Publication number: **0 232 201 B1**

(12) **EUROPEAN PATENT SPECIFICATION**

(45) Date of publication of patent specification: **29.04.92**

(51) Int. Cl.5: **C08F 4/642**, C08F 110/06, C08F 210/16

(21) Application number: **87400168.8**

(22) Date of filing: **26.01.87**

(54) **Process for the direct synthesis of highly amorphous propylene homopolymers and propylene-ethylene copolymers.**

(30) Priority: **28.01.86 US 823442**

(43) Date of publication of application:
**12.08.87 Bulletin 87/33**

(45) Publication of the grant of the patent:
**29.04.92 Bulletin 92/18**

(84) Designated Contracting States:
**DE FR GB IT**

(56) References cited:
**EP-A- 0 226 112**
**DE-A- 3 007 419**

**PATENT ABSTRACTS OF JAPAN, vol. 10, no. 144 (C-349)[2201], 27th May 1986**

(73) Proprietor: **EASTMAN KODAK COMPANY (a New Jersey corporation)**
**343 State Street**
**Rochester New York 14650(US)**

(72) Inventor: **Smith, Thomas William c/o Eastman Kodak Company**
**Patent Department 343 State Street**
**Rochester New York 14650(US)**
**Inventor: Ames, William Albert c/o Eastman Kodak Company**
**Patent Department 343 State Street**
**Rochester New York 14650(US)**
**Inventor: Holliday, Robert Emmett c/o Eastman Kodak Company**
**Patent Department 343 State Street**
**Rochester New York 14650(US)**
**Inventor: Pearson, Neal c/o Eastman Kodak Company**
**Patent Department 343 State Street**
**Rochester New York 14650(US)**

(74) Representative: **Parent, Yves et al**
**Kodak-Pathé Département Brevets et Licences Centre de Recherches et de Technologie Zone Industrielle**
**F-71102 Chalon-sur-Saône Cédex(FR)**

**Description**

Technical Field

This invention relates to a process for preparing, by direct synthesis, highly amorphous propylene homopolymers and propylene-ethylene copolymers using anionic coordination catalysts of the type obtained by reducing supported titanium halide catalysts with aluminum alkyls.

Background of the Invention

Amorphous or atactic polypropylene historically has been obtained as a coproduct of crystalline polypropylene production. Commercial crystalline polypropylene processes, until recently, have produced varying amounts of the amorphous material depending upon the process used. To maximize crystalline polypropylene properties, the gross polymer was normally extracted with hydrocarbon solvents to remove the soluble amorphous material. In the past, some polypropylene producers have considered the amorphous material to be a nuisance product and have disposed of it in landfills or have burned it for its fuel value.

As a result of the desire to increase crystalline production, polypropylene research efforts were directed to developing high performance catalysts which would produce predominately crystalline polypropylene in very high yields. These efforts have succeeded in developing catalysts which yield polypropylene having such a high crystalline content that amorphous removal is no longer necessary. As more and more polypropylene producers have converted to these new processes, the supply of amorphous polypropylene has diminished significantly.

Over the years, some markets for amorphous polypropylene were developed. The material has been used in adhesives, as laminating agents, in cable flooding compounds, and as components of single-ply roofing compositions. Since amorphous polypropylene is rapidly disappearing from the marketplace as a coproduct of crystalline polypropylene production, some of these application areas will shrink in volume if alternate methods for obtaining this material are not developed.

This invention provides a process whereby highly amorphous propylene homopolymer and propylene-ethylene copolymers are produced by direct synthesis. That is, the materials produced by this process are not coproducts of crystalline polypropylene or propylene copolymer production.

The direct synthesis process offers a number of advantages over the earlier coproduct processes. It assures a continuing supply of the amorphous material. By changing certain reaction parameters, properties such as viscosity can be tailormade to meet the consumers' specifications. Heretofore, to obtain amorphous polypropylene having certain viscosity, it was necessary to resort to costly fractionation processes which generally were uneconomical.

Patents of interest include U.S. Patent No. 3,951,935 which describes a process for producing essentially amorphous polyolefins at 100°C to 160°C and at pressures below 1,379 kPa.The catalyst consists of component A which is the reaction product of the chloride and/or an alcoholate of the tetravalent titanium and of an alcoholate and/or a magnesium compound containing hydroxyl groups and, optionally, of a chloride or alcoholate of silicon and/or of aluminum provided that the reaction system must include alkoxy groups and chlorine, and the component B which is an aluminumorganic compound containing chlorine and hydrocarbon radicals in which the atomic proportion of Al:Cl is from 4:1 to 0.8:1. The most preferred catalyst component is the reaction product of $Mg(OR)_2$ and $TiCl_4$ (Column 3, Line 50 of the patent). The preferred cocatalysts are chlorine-containing aluminum alkyls, especially diethylaluminum chloride. The aluminum trialkyls containing no halogen proved to be "absolutely unsuitable" as cocatalysts (Column 2, Paragraph 2).

The process of the current invention differs from this patent, for example, in that the magnesium compound used does not contain alkoxide or hydroxyl groups.

Another patent of interest is U.S. Patent No. 3,933,934. This patent discloses atactic or amorphous waxes prepared from propylene and other alpha-olefins. The catalyst is made from metallic magnesium, a compound of a transition metal, and an alkyl halide. The cocatalyst is one or a plurality of organometallic compounds of the metals of groups II and III of the classification of elements. The polymerization is conducted at temperatures of 40°C to 150°C and at pressure below 20 bar (2,000 kPa). Thus, the catalyst system of the current invention is different from that of this patent.

U.S. Patent No. 4,276,191 describes a catalyst and process for the polymerization of alpha-olefins to predominately atactic products, such catalysts comprising (A) an organoaluminum component and (B) a component which is the solid reaction product of components consisting of (1) a titanium (IV) halide or alkoxyhalide, and (2) a hydrocarbon-soluble organomagnesium-organoaluminum complex. Polymerization temperatures are 0°C to 180°C with 60°C to 100°C being preferred. Polymerization pressures are at least atmospheric, with about 20 to 600 psi (138-4,137 kPa) being preferred (Column 7, Lines 62-65 of the patent). The process disclosed in this patent differs from the current invention in that the catalysts are different.

Previous processes described in the art have largely been concerned with minimizing the amount of amorphous material produced. Most of the newly developed supported catalysts are considered to be high mileage catalysts which yield highly crystalline polypropylene, high density polyethylene, and linear low density polyethylene in very high yields. However, in these processes, these catalysts are typically used in the vapor phase or in bulk monomer phase at temperatures below 100°C.

The supported catalysts were developed to provide highly crystalline polypropylene, polyethylene, and linear low density polyethylene in very high yields. In most cases, yields are so great that catalyst removal is unnecessary. Only a catalyst deactivation step, such as treatment with steam, is required. In addition, the amount of amorphous material produced is so small that it can be left in the gross polymer without adversely affecting physical properties.

It was completely unexpected when the supported catalysts of this invention are used at temperatures above 130°C in the presence of hydrocarbon solvents that highly amorphous products could be produced. A decrease in hexane index was expected, but not to the extent observed; that is, to below 30 for propylene homopolymer. Previous studies with unsupported catalysts such as AA-TiCl₃ (aluminum-reduced titanium trichloride activated by trituration), for example, have shown that hexane indices are generally of the order of 50 or greater even when these catalysts are used at temperatures as high as 170°C.

Description of the Invention

In accordance with the present invention, there is provided a process for the production of highly amorphous propylene homopolymers and propylene-ethylene copolymers which comprises polymerizing propylene or a mixture of propylene and ethylene at a temperature of about 130°C-190°C and at a pressure of about 300-5000 psig (2,068-34,475 kPa) in the presence of a catalytic amount of a catalyst system which comprises (a) titanium halide on a support comprising magnesium chloride as a major component and (b) an aluminum trialkyl in which the alkyl groups contain 2-8 carbon atoms.

The titanium halide on a support comprising magnesium chloride is conveniently prepared by milling (e.g., ball-milling) the magnesium chloride (solid) with titanium halide (liquid) until the titanium halide forms a complex on the surface of the magnesium chloride. Alternately, the magnesium chloride may be pulverized first, and the titanium halide may be stirred with it until the desired supported catalyst is formed. Generally, the support referred to herein as "magnesium chloride" is at least 20% by wt. magnesium chloride, but may contain other ingredients such as, for example, aluminum chloride, aromatic carboxylic acid esters such as ethyl benzoate. The method of preparing catalysts of titanium halide supported on magnesium chloride is generally known in the art, and such catalysts are commercially available. Preferably, the titanium halide is titanium tetrachloride (TiCl₄) and the support contains a major amount (about 20% or greater) of magnesium chloride (MgCl₂).

Preferred catalysts for the process of this invention are anionic coordination catalysts of the type obtained by reducing supported titanium halide catalysts with aluminum trialkyls of 2 to 8 carbon atoms such as aluminum triethyl or aluminum triisobutyl. The most preferred transition metal halide is titanium (IV) chloride. The most preferred catalyst support is magnesium chloride or a composition containing magnesium chloride as a major component. Nonsupported catalysts such as AA-TiCl₃ have been found to be generally poor catalysts for producing highly amorphous polypropylene or propylene-ethylene copolymers. These catalysts when used with aluminum alkyl cocatalysts in the process described in this invention generally produce too much crystalline polymer and yield a brittle gross polymer product.

The hexane index test can be used to determine the percent crystalline and amorphous material in the gross polypropylene product. A weighed sample of gross polymer is placed in a tared extraction thimble and extracted with refluxing hexane in a Soxhlet extractor for a specified time period, usually 24 hours. After extraction, the undissolved polymer and thimble are dried and weighed. The percent by weight of the original sample which is insoluble is the hexane index. A highly amorphous material will have a low hexane index, usually 0 to less than 30, and will be flexible rather than brittle at ambient temperature. The new high performance crystalline polypropylene catalysts, which are typically transition metal halides deposited on magnesium chloride-containing supports, generally produce isotactic polypropylene products having hexane indices on the order of 95 or greater.

In general, the continuous process of the present invention is conveniently carried out by feeding monomer(s), solvent and catalyst slurry (in solvent) into a suitable stirred reactor, such as a loop reactor. The rates of feed will be obvious to those skilled in the art, and will be such that the reaction occurs at the desired rate, i.e., fast enough to be practical, but not so fast that excessive heat and pressure is produced. Hydrogen may be added in the monomer stream to control viscosity. The weight ratio of propylene to ethylene when producing copolymers may be between 415 and 5 in order to produce a copolymer containing about .3-20 wt. % ethylene. After polymer has formed, polymer, monomer and solvent mixture containing catalyst are continuously removed and fed to a letdown tank. Monomer may be flashed overhead. The mixture is filtered to remove solid catalyst particles, alumina bed treated to remove any soluble catalyst components, and finally stripped to remove solvent. The quantity of catalyst feed will be a catalytic amount, within the limits defined above. The cocatalyst-catalyst or aluminum-titanium mole ratio will be within the range of 1:1 and 15:1, preferably 2:1 to 10:1. The optimum mole ratio varies within this preferred range for different supported catalysts. Suitable solvents are well known to those skilled in the art, and include, for example, mineral spirits, naphtha, kerosene, etc. Alternately, the process may be carried out in the melt phase at temperatures above 150°C. The process can be carried out batchwise, using obvious modifications to the continuous process described above.

For production of highly amorphous propylene homopolymers, the process described in this invention can be conducted either batchwise or continuously. The continuous process is greatly preferred. For production of highly amorphous propylene-ethylene copolymers, this process is best operated continuously. Batchwise polymerization of propylene and ethylene invariably results in ethylene blocking because of its much greater reactivity. Highly random incorporation of ethylene is greatly preferred because if further reduces the crystallinity and improves low temperature flexibility.

Suitable polymerization temperatures for the process are in the range of 130°C to 190°C with 150°C to 170°C being the most preferred range. Temperatures below this range result in an increase in the amount of crystalline material formed. Temperatures above this range result in loss of catalyst activity.

A suitable pressure range is 300 to 5,000 psig (2,068-34,475 kPa). The most preferred range is about 750 psig (6,895 kPa) to about 2,000 psig (13,790 kPa).

The highly amorphous propylene homopolymers of the current invention have hexane index values below 30, generally about 15 to 25. Needle penetration hardness values generally range from 8 to 20 dmm. Ring and ball softening points (RBSP) are about 148°C to 158°C and specific gravity values are 0.86 to 0.89. Viscosities are from below 0.2 to 100 Pa.s at 190°C as measured on a Thermosel viscometer. The glass transition temperature of the highly amorphous propylene homopolymers of this invention is about -16°C.

Products produced by the process of the current invention are useful in formulating hot-melt adhesives. They are also useful as sealants and can be used in cable-flooding compositions. The products are compatible with asphalt and can be used for asphalt modification in the manufacture of single-ply roofing.

The following examples are submitted for a better understanding of the invention. The first six examples describe batch autoclave experiments using the preferred supported catalysts of this invention or other catalysts as described. The preferred supported catalysts are 10 percent $TiCl_4$ deposited on $MgCl_2$ powder and commercial high yield polyolefin catalysts which contain a titanium halide on a support which contains magnesium chloride as a major component.

The batch experiments are conducted as follows: A 2-liter stirred autoclave is charged with 400 ml of dry mineral spirits, heated to the desired polymerization temperature, and charged to 300 psig (2,068 kPa) with dry propylene. The catalyst mixture in a 50-ml charge bomb is flushed into the reactor with an additional 400 ml of mineral spirits. Propylene is charged until the pressure reaches 1,000 psig (6,895 kPa)-.As the polymerization proceeds, the pressure is allowed to decrease to 800 psig (5,516 kPa) before recharging to 1,000 psig (6,895 kPa) with propylene. The autoclave is discharged after the accumulated propylene pressure drop reaches 2,000 psi (13,790 kPa) or after a polymerization time of 2 hours. Product is isolated by vacuum stripping at 230°C.

Example 1
_____

A catalyst consisting of 10 percent $TiCl_4$ on magnesium chloride (containing 0.26 mmole of $TiCl_4$) and 0.65 mmole of $AlEt_3$ is used to conduct a batch experiment at 160°C using the described procedure. The experiment is completed after 95 minutes yielding 433 grams of a flexible product having a melt viscosity at 190°C of 3.75 Pa.s, a hexane index of 25.2, a specific gravity of 0.87, a needle penetration hardness value of 11.3 dmm, and a RBSP of 156°C. The catalyst efficiency is 1,665 grams of polymer per mmole of $TiCl_4$.

Example 2

A magnesium chloride-supported polyolefin catalyst (containing 0.13 mmole of titanium halide) and 0.65 mmole of AlEt$_3$ cocatalyst are used to conduct a batch experiment at 160°C using the described procedure. The experiment is completed after 106 minutes yielding 215 grams of a flexible product having a melt viscosity at 190°C of 7.14 Pa.s, a hexane index of 17.8, a specific gravity of 0.87, a needle penetration hardness value of 9.5, and a RBSP of 155°C. The catalyst efficiency is 1,654 grams of polymer per mmole of titanium compound.

Example 3

A commercial polyolefin catalyst comprising a titanium halide on a magnesium chloride-containing support (containing 0.19 mmole of titanium halide) and 0.95 mmole of AlEt$_3$ cocatalyst are used to conduct a batch experiment at 160°C using the described procedure. The experiment is completed after 67 minutes yielding 335 grams of a flexible product having a melt viscosity at 190°C of 7.95 Pa.s, a hexane index of 19.1, a specific gravity of 0.87, a needle penetration hardness value of 10.2 dmm, and a RBSP of 156°C. The catalyst efficiency is 1,763 grams of polymer per mmole of titanium compound.

Example 4 (Control)

The same commercial supported catalyst used in Example 3 (containing 0.39 mmole of titanium halide) and 3.9 mmole of Et$_2$AlCl cocatalyst are used to conduct a batch autoclave experiment at 160°C. The polymerization runs for 2 hours with a total pressure drop of 800 psi (5,516 kPa).The product weighs 187 grams. It has a viscosity at 190°C of 4.69 Pa.s, hexane index of 17.6, specific gravity of 0.86, needle penetration hardness of 27.0, and a RBSP of 154°C. The catalyst efficiency is 479 grams of polymer per mmole of titanium compound.

Highly amorphous polypropylene is produced in both Examples 3 and 4; however, the catalyst efficiency in Example 3 is almost 4 times as great as in Example 4. The difference is the use of the preferred AlEt$_3$ cocatalyst in Example 3; whereas, Et$_2$AlCl is used in Example 4.

Examples 5 and 6 show the contrasting performances of unsupported titanium halide catalysts which produce more crystalline products under the same conditions.

Example 5 (Control)

A mixture consisting of 0.65 mmole of AA-TiCl$_3$ catalyst and 0.65 mmole of AlEt$_3$ cocatalyst is used to conduct a batch experiment at 160°C. The polymerization is completed after 79 minutes. A brittle product weighing 382 grams having a viscosity at 190°C of 143 Pa.s, a hexane index ot 47.6, a needle penetration hardness of less than 0.1 dmm, and a RBSP of 161°C is obtained.

Example 6 (Control)

A catalyst containing 0.81 mmole of preactivated TiCl$_3$ and 0.41 mmole AlEt$_3$ cocatalyst is used to conduct a batch autoclave experiment at 160°C. The polymerization requires 81 minutes to reach a 2,000-psi (13,790 kPa) pressure drop. A brittle product weighing 250 grams is obtained. The melt viscosity at 190°C is 24.8 Pa.s. The polymer has a hexane index of 49.2, a needle penetration hardness of 2.0 dmm, and a RBSP of 165°C.

The products produced in Examples 5 and 6 are unsuitable for use in applications requiring amorphous polypropylene type materials.

Example 7

This example describes the synthesis of a highly amorphous propylene homopolymer in a continuous process using a supported catalyst and conditions described in the invention. The catalyst employed is the same commercial titanium halide on a magnesium chloride-containing support which was used in Examples 3 and 4.

A 25.4 l stirred loop reactor is fed continuously with propylene, mineral spirits, and catalyst slurry. Hydrogen is added to control the product viscosity. Highly amorphous homopolymer, monomer, and solvent mixture containing catalyst are removed from the reactor continuously to a letdown tank. Unreacted monomer is flashed overhead. The polymer-solvent mixture is filtered to remove solid catalyst particles, alumina bed treated, and stripped to remove solvent.

Reaction conditions are shown in the following table:

| | |
|---|---|
| Propylene Charge | 6.36 Lb/Hr (2.88 kg/h) |
| Mineral Spirits Charge | 4.24 Lb/Hr (1.92 kg/h) |
| Hydrogen Charge | $7.3 \times 10^{-4}$ Lb/Hr ($3.3 \times 10^{-4}$ kg/h) |
| Catalyst Charge | $3.1 \times 10^{-3}$ Lb/Hr ($1.4 \times 10^{-3}$ kg/h) |
| Cocatalyst | $AlEt_3$ |
| Cocatalyst/Catalyst Mole Ratio | 5/1 |
| Reactor Temperature | 165°C |
| Reactor Pressure | 1,040 PSIG (7,170 kPa) |
| Amorphous Polypropylene Production | 5.54 Lb/Hr (2.51 kg/h) |
| Stirrer Speed | 750 RPM |

The highly amorphous polypropylene product has a melt viscosity at 190°C of 2 Pa.s, a hexane index of 23, and a RBSP of 154°C. The needle penetration hardness is 11.2 dmm and the specific gravity is 0.87. The glass transition temperature is -16°C. The product is very flexible at ambient temperature.

Example 8 (Control)

This example shows the results obtained with nonsupported $AA\text{-}TiCl_3$ catalyst when propylene polymerization is conducted under similar conditions.

| | |
|---|---|
| Propylene Charge | 6.56 Lb/Hr (2.97 kg/h) |
| Mineral Spirits Charge | 4.74 Lb/Hr (2.14 kg/h) |
| Hydrogen Charge | $1.0 \times 10^{-3}$ Lb/Hr ($0.45 \times 10^{-3}$ kg/h) |
| Catalyst Charge | $8.3 \times 10^{-3}$ Lb/Hr ($3.76 \times 10^{-3}$ kg/h) |
| Catalyst | $AA\text{-}TiCl_3$ |
| Cocatalyst | $AlEt_3$ |
| Cocatalyst/Catalyst Mole Ratio | 1/1 |
| Reactor Temperature | 170°C |
| Reactor Pressure | 1,040 PSIG (7,170 kPa) |
| Polymer Production | 6.2 Lb/Hr (2.81 kg/h) |
| Stirrer Speed | 750 RPM |

The polypropylene product has a melt viscosity at 190°C of 4.5 Pa.s, a hexane index of 51.9, and a RBSP of 155°C. The needle penetration hardness is 2.6 dmm and the specific gravity is 0.88. The product made with this catalyst is very brittle and does not resemble highly amorphous polypropylene in any manner.

Comparison of Examples 7 and 8 show that the product made in Example 7 has a much lower hexane index and is much softer. In addition it is flexible; whereas, the product obtained in Example 8 is brittle even though it has a higher viscosity. The catalyst system of Example 8 under these conditions will not yield a highly amorphous propylene homopolymer.

Example 9

This example compares the results obtained when the supported titanium halide catalyst used in Example 7 and a nonsupported catalyst, $AA\text{-}TiCl_3$, were used in the continuous unit to prepare propylene-ethylene copolymers containing approximately 5 percent ethylene.

| Catalyst | Supported | Nonsupported |
|---|---|---|
| Ethylene Charge, | | |
| lb/hr | 0.26 | 0.24 |
| | (0.117 kg) | (0.109 kg) |
| Propylene Charge, | | |
| lb/hr | 6.56 | 6.25 |
| | (2.97 kg) | (2.83 kg) |
| Mineral Spirits | | |
| Charge, lb/hr | 4.48 | 4.75 |
| | (2.03 kg) | (2.15 kg) |
| Hydrogen Charge, | | |
| lb/hr | $2.5 \times 10^{-4}$ | $4.8 \times 10^{-4}$ |
| | $(1.13 \times 10^{-4} \text{ kg})$ | $(2.17 \times 10^{-4} \text{ kg})$ |
| Cocatalyst | $AlEt_3$ | $AlEt_3$ |
| Cocatalyst/Catalyst | | |
| Mole Ratio | 5/1 | 1/1 |
| Catalyst Charge, | | |
| lb/hr | $3.75 \times 10^{-3}$ | $8.0 \times 10^{-3}$ |
| | $(1.69 \times 10^{-3} \text{ kg})$ | $(3.62 \times 10^{-3} \text{ kg})$ |
| Reactor Temperature | | |
| °C | 166 | 170 |
| Polymer Production, | | |
| lb/hr | 5.8 | 5.8 |
| | (2.63 kg) | (2.63 kg) |
| Reactor Pressure, | | |
| psig | 1,040 | 1,040 |
| | (7,170 kPa) | (7,170 kPa) |
| Stirrer Speed, rpm | 750 | 750 |
| Viscosity at 190°C, | | |
| cp | 2,150 | 7,750 |
| Hexane Index | 17.9 | 46.2 |
| RBSP, °C | 148 | 150 |
| Penetration | | |
| Hardness, dmm | 18.8 | 3.1 |
| Specific Gravity | 0.87 | 0.88 |

```
Weight Percent

  Ethylene          4.4              4.0

  Product Nature    Flexible         Brittle
```

Comparison of properties of the copolymers made with the two catalyst systems under similar reaction conditions shows that the product made with the nonsupported AA-TiCl$_3$ catalyst contains much more crystalline matertial and is much harder. Even though it has a higher viscosity, this product is still brittle. The product made with the supported catalyst contains much less crystalline material, is softer, and is flexible. It is a highly amorphous copolymer.

Example 10

This example describes production of a higher viscosity, more highly amorphous propylene-ethylene copolymer using the supported catalyst used in Example 7.

| | |
|---|---|
| Ethylene Charge | 0.31 Lb/Hr (0.14 kg/h) |
| Propylene Charge | 5.17 Lb/Hr (2.34 kg/h) |
| Mineral Spirits Charge | 5.62 Lb/Hr (2.55 kg/h) |
| Hydrogen Charge | 0 Lb/Hr (0 kg/hr) |
| Cocatalyst | AlEt$_3$ |
| Cocatalyst/Catalyst Mole Ratio | 5/1 |
| Catalyst Charge | 6.1 x 10$^{-4}$ Lb/Hr (2.76 x 10$^{-4}$ kg/h) |
| Reactor Temperature | 151°C |
| Reactor Pressure | 1,040 PSIG (7,170 kPa) |
| Polymer Production | 4.26 Lb/Hr (1.92 kg/h) |
| Stirrer Speed | 750 RPM |
| Viscosity at 190°C | 10.475 Pa.s |
| Hexane Index | 7.8 |
| RBSP | 139°C |
| Penetration Hardness | 28.0 dmm |
| Specific Gravity | 0.86 |
| Weight Percent Ethylene | 7.2 |
| Product Nature | Flexible |

The polymer produced in this example is very highly amorphous. It is a soft material and is flexible. The glass transition temperature of the copolymer is -28°C. Thus it can be used in applications requiring low temperature flexibility.

These examples demonstrate the process of this invention to produce highly amorphous polypropylene and propylene-ethylene copolymers at temperatures of 130°C to 190°C and pressures in the 750 to 2,000 psig (5,171-13,790 kPa) range using an aluminum alkyl cocatalyst with a supported catalyst consisting of a titanium halide on magnesium chloride or on a support which contains magnesium chloride as a major component.

The following is a description of the test methods used in this specification:

Needle Penetration Hardness - ASTM D-5-73 RBSP, °C - ASTM E-28

Glass Transition Temperature, Tg - Determined on a Differential Scanning Calorimeter using ASTM Procedure D-3418.

Unless otherwise specified, all parts, percentages, ratios, etc., are by weight.

The invention has been described in detail with particular reference to preferred embodiments thereof, but it will be understood that variations and modifications can be effected within the spirit and scope of the invention.

# EP 0 232 201 B1

## Claims

1. Process for the production of highly amorphous propylene homopolymers or propylene-ethylene copolymers characterized by polymerizing propylene or a mixture of propylene and ethylene at a temperature of 130°C-190°C and a pressure of 300-5000 psig (2,068-34,475 kPa) in the presence of a catalytic amount of a catalyst system which comprises (a) titanium halide on a support comprising magnesium chloride and (b) an aluminum trialkyl in which the alkyl groups contain 2-8 carbon atoms.

2. Process according to Claim 1 wherein said titanium halide is titanium tetrachloride.

3. Process according to Claim 1 wherein said titanium halide is titanium tetrachloride and said support contains magnesium chloride as a major ingredient.

4. Process according to Claim 1 wherein said aluminum trialkyl is aluminum triethyl or aluminum triisobutyl.

5. Process according to Claim 1 wherein the titanium halide is titanium tetrachloride, the aluminum trialkyl is aluminum triethyl and the mole ratio of aluminum triethyl to titanium chloride is between 1:1 and 15:1.

6. The process of Claim 1 wherein the reaction occurs in the presence of a hydrocarbon solvent of said polymer or copolymer.

## Revendications

1. Procédé pour la fabrication d'homopolymères du propylène ou de copolymères propylène-éthylène fortement amorphes, caractérisé en ce que l'on polymérise le propylène ou un mélange de propylène et d'éthylène à une température de 130ºC-190ºC et sous une pression de 300-5000 psig (2 068-34 475 kPa) en présence d'une quantité catalytique d'un système catalytique qui comprend (a) un halogénure de titane sur un support comprenant du chlorure de magnésium et (b) un trialkylaluminium dans lequel les groupes alkyle contiennent 2-8 atomes de carbone.

2. Procédé selon la revendication 1, caractérisé en ce que ledit halogénure de titane est le tétrachlorure de titane.

3. Procédé selon la revendication 1, caractérisé en ce que ledit halogénure de titane est le tétrachlorure de titane et ledit support contient du chlorure de magnésium comme ingrédient principal.

4. Procédé selon la revendication 1, caractérisé en ce que ledit trialkylaluminium est le triéthylaluminium ou le triisobutylaluminium.

5. Procédé selon la revendication 1, caractérisé en ce que l'halogénure de titane est le tétrachlorure de titane, le trialkylaluminium et le triéthylaluminium et le rapport molaire du triéthylaluminium au chlorure de titane est compris entre 1:1 et 15:1.

6. Le procédé selon la revendication 1, caractérisé en ce que la réaction a lieu en présence d'un solvant hydrocarboné dudit polymère ou copolymère.

## Patentansprüche

1. Verfahren zur Herstellung von hochamorphen Propylen-Homopolymeren oder Propylen-Ethylen-Copolymeren, gekennzeichnet durch Polymerisation von Propylen oder einer Mischung von Propylen und Ethylen bei einer Temperatur von 130°C - 190°C und einem Druck von 2068 - 34457 kPa in Gegenwart einer katalytisch wirksamen Menge eines katalytischen Systems, das umfaßt (a) Titanhalogenid auf einem Träger mit Magnesiumchlorid und (b) ein Aluminiumtrialkyl, in dem die Alkylgruppen 2 bis 8 Kohlenstoffatome aufweisen.

2. Verfahren nach Anspruch 1, in dem das Titanhalogenid Titantetrachlorid ist.

3. Verfahren nach Anspruch 1, in dem das Titanhalogenid Titantetrachlorid ist und der Träger Magnesiumchlorid als Hauptbestandteil aufweist.

4. Verfahren nach Anspruch 1, in dem das Aluminiumtrialkyl Aluminiumtriethyl oder Aluminiumtriisobutyl ist.

5. Verfahren nach Anspruch 1, in dem das Titanhalogenid Titantetrachlorid ist, das Aluminiumtrialkyl Aluminiumtriethyl ist und bei dem das Molverhältnis von Aluminiumtriethyl zu Titanchlorid zwischen 1:1 und 15:1 liegt.

6. Verfahren nach Anspruch 1, in dem die Reaktion in Gegenwart eines Kohlenwasserstofflösungsmittels für das Polymer oder Copolymer erfolgt.